# EUROPÄISCHE PATENTANMELDUNG

(11) **EP 0 732 136 A1**
(43) Veröffentlichungstag der Anmeldung: **18.09.1996**
(21) Anmeldenummer: 96102402.3
(22) Anmeldetag: 17.02.1996
(51) Int. Cl.: B01D 46/10, B60H 3/06

(54) **Filter**

(30) Priorität: 10.03.1995 DE 19508534
(71) Anmelder: FILTERWERK MANN & HUMMEL GMBH, D-71631 Ludwigsburg (DE)
(72) Erfinder: Luka, Helmut, 70806 Kornwestheim (DE); Sommer, Bruno, 71636 Ludwigsburg (DE)
(74) Vertreter: Voth, Gerhard, Dipl.-Ing.

(57) **Zusammenfassung**

Die Erfindung betrifft ein Filter, insbesondere für die Innenraumbelüftung von Fahrzeugen. Es besteht aus wenigstens einem als plattenförmiges Element (10) gebildeten Filterkörper und einem das plattenförmige Element (10) umschließenden Rahmen, wobei der Rahmen aus mindestens zwei in der Ebene des plattenförmigen Elementes miteinander verbundenen Rahmenteilen (11, 12) hergestellt ist.

## Beschreibung

Die Erfindung betrifft ein Filter nach dem Oberbegriff des Hauptanspruchs.

Ein solches Filter ist aus der DE-OS 39 02 546 bekannt. Dieses wird in einer Klimaanlage eines Kraftfahrzeuges verwendet und besteht aus wenigstens zwei Lagen plattenförmiger Elemente aus nachgiebigem Material und wenigstens zwei umlaufenden Rahmen, die mittels Spannelementen zusammengehalten sind und die den Rand des Filterkörpers zwischen sich einschließen.

Ein Nachteil dieses Filters besteht darin, daß je nach Anzahl der plattenförmigen Elemente der Rahmen an die Dicke des Filterpakets angepaßt werden muß. Damit ist der Aufbau eines Filterelements festgelegt und kann nicht verändert werden. Es hat sich jedoch gezeigt, daß jeder Anwendungsfall ein angepaßtes Filtermittel benötigt, d. h. die Zusammensetzung des Filterpakets ist variabel. Außerdem ist bei solchen Elementen für Klimaanlagen oder für die Innenraumbelüftung von Fahrzeugen auf eine möglichst wirtschaftliche Herstellung des Filtereinsatzes zu achten, insbesondere auch unter Berücksichtigung von Umweltaspekten, da ein solcher Filtereinsatz regelmäßig ausgetauscht und entsorgt werden muß.

Der Erfindung liegt daher die Aufgabe zugrunde, ein Filter zu schaffen, das universell einsetzbar ist und mit möglichst geringem Kosten und geringem Montageaufwand herstellbar ist. Diese Aufgabe wird ausgehend von dem Oberbegriff des Hauptanspruchs durch dessen kennzeichnenden Merkmale gelöst.

Der Vorteil der Erfindung liegt darin, daß lediglich ein einziges Rahmenteil erforderlich ist und damit bei der Herstellung dieses Rahmenteils mittels Kunststoffspritzgießen ein einziges Werkzeug. Das Rahmenteil ist derart gestaltet, daß zwei identische Rahmenteile miteinander verbunden werden und in der Verbindungsebene das plattenförmige Element eingespannt werden kann.

Gemäß einer vorteilhaften Weiterbildung ist dieses Rahmenteil mit einer Schnappverbindung ausgestattet. Damit ist eine besonders einfache Verbindung der Teile möglich. Aufgrund der identischen Ausgestaltung der Rahmenteile können mehrere plattenförmige Elemente übereinander gestapelt werden. Dabei wird jeweils ein weiteres Rahmenteil angefügt.

Zur Verbesserung der Stützwirkung ist in einer Weiterbildung der Erfindung jedes Rahmenteil mit einem oder mehreren Stützstegen versehen. Die Stützstege positionieren das plattenförmige Element und verhindern ein unbeabsichtigtes Entfernen des Filterkörpers.

Eine weitere Ausgestaltung der Erfindung sieht vor, wenigstens ein Rahmenteil mit einem Dichtungselement zu versehen. Dieses kann eine umlaufende Schaumstoffdichtung oder eine PUR-Dichtung sein. Das Dichtungselement dient zum Abdichten des Rahmens in einem Gehäuse bzw. Trägerteil.

In einer weiteren vorteilhaften Ausgestaltung sind die Rahmenteile mit wulstförmigen Elementen versehen. Diese dienen zum Fixierung und/oder Abdichten des Filterkörpers im Randbereich. Damit sind keine zusätzlichen Dichtungselemente zwischen Rahmen und Filterkörper nötig.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

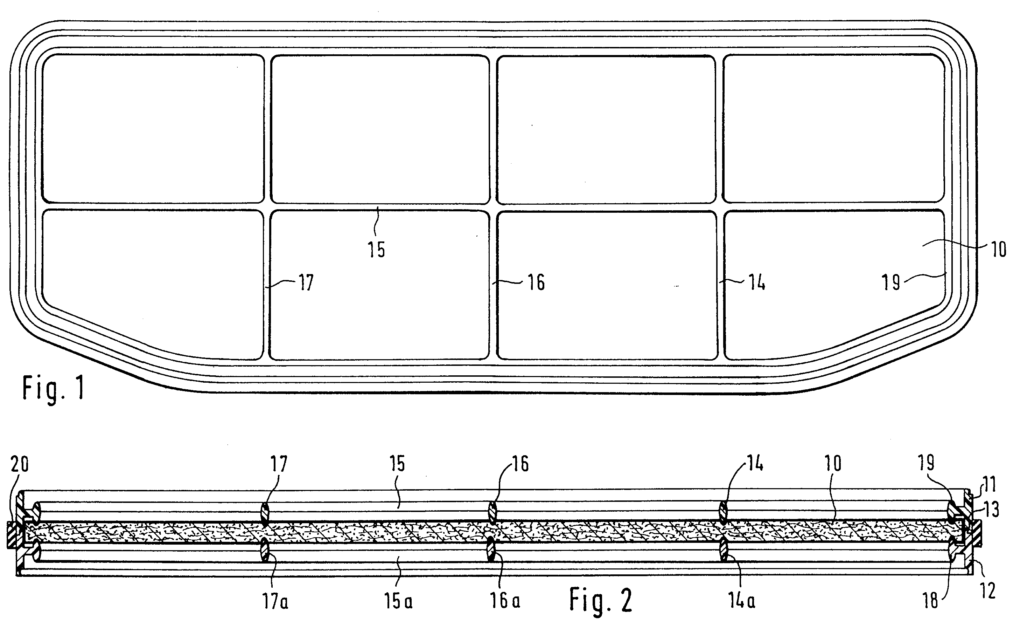

Die Erfindung wird nachfolgend anhand eines Ausführungsbeispiels näher erläutert. Es zeigt
- Figur 1: die Draufsicht auf ein Filter,
- Figur 2: eine Schnittdarstellung des in Figur 1 gezeigten Filters,
- Figur 3: zeigt eine Schnittdarstellung eines Filters in Stapelbauweise.

Das in den Figuren dargestellte Filter besteht aus einem Filterkörper 10, welcher als plattenförmiges Element ausgestaltet ist. Dieser Filterkörper ist beispielsweise eine Aktivkohlematte und dient zur Filtrierung der Frischluft für den Innenraum eines Fahrzeugs. Der Filterkörper 10 ist zwischen zwei Rahmenteile 11, 12 eingespannt. Die Rahmenteile sind identisch und besitzen eine umlaufende Rastverbindung 13. Über diese Rastverbindung werden beide Rahmenteile zusammengeschnappt. Die Rahmenteile sind ferner mit Stützstegen 14, 15, 16, 17 bzw. 14a, 15a, 16a, 17a versehen, zur Fixierung des Filterkörpers in der eingebauten Lage. Die Abdichtung des Filterkörpers am Rahmen erfolgt über umlaufende wulstförmige Elemente 18, 19. Gleichzeitig übernehmen diese Elemente auch die Fixierung des Filterkörpers 10.

Eine umlaufende Dichtung 20 dient dazu, das gesamte Filter in einem Gehäuse bzw. einem Aufnahmeteil abdichtend anzuordnen. Da die Rahmenteile identisch sind, weisen diese auch an ihren äußeren Stirnkanten Schnappverbindungen auf. Damit besteht die Möglichkeit, mehrere Filterkörper gestapelt übereinander anzuordnen und jeweils mit einem weiteren Rahmenteil zu fixieren.

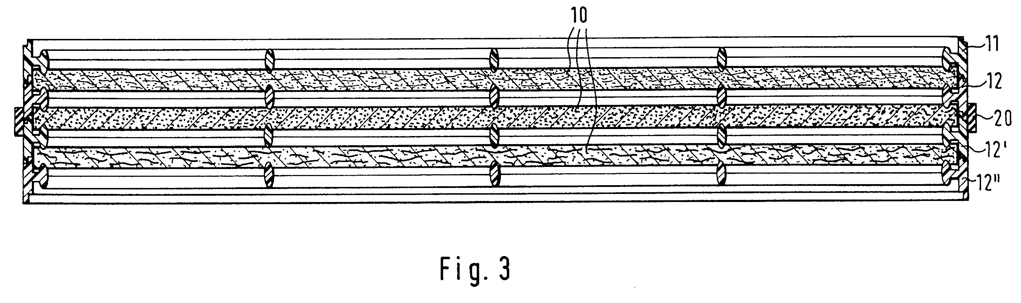

Die Figur 3 zeigt ein Filter in Stapelbauweise. Das heißt, hier sind mehrere plattenförmige Elemente 10 in einer Art Reihenschaltung zusammengekoppelt. Da die Rahmenteile identisch aufgebaut sind, ist die Kopplung beliebig vieler Elemente möglich. Diese Elemente können Filterkörper mit unterschiedlichen Filtermaterialen bilden. So kann beispielsweise ein Element ein Aktivkohlefilter beinhalten, ein weiteres Element kann ein Grobfilter oder Vorabscheider beinhalten.

## Patentansprüche

1. Filter, insbesondere für die Innenraumbelüftung von Fahrzeugen, mit wenigstens einem als plattenförmiges Element gebildeten Filterkörper und einem das plattenförmige Element umschließenden Rahmen, dadurch gekennzeichnet, daß der Rahmen aus mindestens zwei in der Ebene des plattenförmigen Elementes (10) miteinander verbundenen Rahmenteilen (11, 12) besteht.

2. Filter nach Anspruch 1, dadurch gekennzeichnet, daß die Verbindung der Rahmenteile (11, 12) eine Schnapp- oder Rastverbindung (13) ist.

3. Filter nach Anspruch 1 oder 2, dadurch gekennzeichnet, daß die Rahmenteile (11, 12) identisch aufgebaut sind und in beliebiger Anzahl verbindbar sind.

4. Filter nach einem der vorigen Ansprüche, dadurch gekennzeichnet, daß jedes Rahmenteil (11, 12) mit Stützstegen (14 - 17) für das plattenförmige Element (10) versehen ist.

5. Filter nach einem der vorigen Ansprüche, dadurch gekennzeichnet, daß an einem oder mehreren Rahmenteilen (11, 12) ein Dichtungselement (20) zum Abdichten des Rahmens in einem Gehäuse vorgesehen ist.

6. Filter nach einem der vorigen Ansprüche, dadurch gekennzeichnet, daß jedes Rahmenteil wulstförmige Elemente (18, 19) zum Fixierung und/oder Abdichten den plattenförmigen Elements (10) aufweist.
